# EUROPÄISCHE PATENTANMELDUNG

(11) **EP 4 112 341 A1**
(43) Veröffentlichungstag der Anmeldung: **04.01.2023**
(21) Anmeldenummer: 22181451.0
(22) Anmeldetag: 28.06.2022
(51) Int. Cl.: B60H 1/00, B60H 1/32

(54) **HEIZUNGS- UND KLIMAANLAGE**

(30) Priorität: 28.06.2021 AT 505352021
(71) Anmelder: AVL List GmbH, 8020 Graz (AT)
(72) Erfinder: Paul, Christian, 85309 Pörnbach (DE); Zotter, Gerald, 8010 Graz (AT)

(57) **Zusammenfassung**

Die Erfindung betrifft eine Heizungs- und Klimaanlage (1) mit einer Temperierpumpeneinheit (2) mit einem von einem Kältemittel durchströmten Kältemittelkreis (20) mit einem Kompressor (21) , einem Kondensator (22), einer Expansionseinrichtung (23) und einem Verdampfer (24),
mit einer Heizungs-, Lüftungs- und Klimatisierungs-Einheit (3) mit zumindest einem von einem Kühlmittel durchströmten Wärmetauschermodul (31, 32), einem Kaltkreis (4) und einem Warmkreis (5), wobei zumindest in einem ersten Betriebsmodus der Warmkreis (4) mit dem Kondensator (22) des Kältemittelkreiseses (20) und zumindest in einem zweiten Betriebsmodus der Kaltkreis (4) mit dem Verdampfer (24) des Kältemittelkreises (20) thermisch verbindbar ist.

Eine effiziente Temperierung des Innenraumes wird ermöglicht, wenn die Heizungs- und Klimaanlage (1) zum Kühlen des Kühlmittels mit Umgebungsluft einen vom Kühlmittel durchströmten Kühlmittel-Kühler (61) aufweist, welcher zumindest im ersten Betriebsmodus mit dem Verdampfer (24) des Kältemittelkreises (20) und zumindest im zweiten Betriebsmodus mit dem Kondensator (22) des Kältemittelkreises (20) thermisch verbindbar ist.

## Beschreibung

Die Erfindung betrifft eine Heizungs- und Klimaanlage, insbesondere für ein Kraftfahrzeug, mit einer Temperierpumpeneinheit mit einem von einem Kältemittel durchströmten Kältemittelkreis mit einem Verdampfer, einem Kompressor, einem Kondensator und einer Expansionseinrichtung,
mit einer Heizungs-, Lüftungs- und Klimatisierungs-Einheit mit zumindest einem von einem Kühlmittel durchströmten Wärmetauschermodul, einem Kaltkreis und einem Warmkreis, wobei zumindest in einem ersten Betriebsmodus der Warmkreis mit dem Kondensator des Kältemittelkreiseses und zumindest in einem zweiten Betriebsmodus der Kaltkreis mit dem Verdampfer des Kältemittelkreises thermisch verbindbar ist. Weiters betrifft die Erfindung ein Verfahren zum Temperieren eines Innenraumes, insbesondere eines Fahrzeuges, mit einer solchen Heizungs- und Klimaanlage.

Die DE 10 2009 059 240 A1 beschreibt ein Kraftfahrzeug-Kühlsystem mit einem ersten Kaltkreislauf, in dem einer Kühlflüssigkeit zirkulierbar ist. In den ersten Kaltkreislauf sind elektrische Komponenten eingebunden, die über die Kühlflüssigkeit gekühlt werden können. Kühlleistung wird durch eine Kälteanlage bereitgestellt, wobei die Kühlleistung der Kälteanlage über einen Kältemittel-Kühlflüssigkeit-Wärmetauscher auf die Kühlflüssigkeit übertragen wird. In dem ersten Kaltkreislauf ist ein erster Kühlflüssigkeits-Luft-Wärmetauscher zur Kühlung von Luft für einen Fahrzeug-Innenraum angeordnet. Weiters weist das Kühlsystem einen zweiten Kaltkreislauf auf, dessen zirkulierende Kühlflüssigkeit über einen weiteren Kühlflüssigkeits-Luft-Wärmetauscher an die Kälteanlage gekoppelt ist. Das Kühlsystem weist darüber hinaus einen dritten Flüssigkeitskreislauf auf, dessen Kühlflüssigkeit von dem zweiten Kaltkreislauf getrennt werden kann und in welchem ein zweiter Kühlflüssigkeit-Luft-Wärmetauscher, sowie eine Fahrzeugheizvorrichtung angeordnet ist.

Heizungs- und Klimaanlagen von Elektrofahrzeugen weisen üblicherweise PTC-Heizungen ("Positive Temperature Coefficient Thermistor") oder konventionelle Wärmepumpen auf. Sie haben den Nachteil, dass sie durch ihren Energiebedarf insbesondere im Winter die Reichweite des Elektrofahrzeuges erheblich reduzieren.

Aufgabe der Erfindung ist es, eine effiziente Temperierung des Innenraumes zu ermöglichen und insbesondere die Reichweite von Elektrofahrzeugen zu erhöhen.

Erfindungsgemäß wird die Aufgabe bei einer Heizungs- und Klimaanlage der eingangs genannten Art dadurch gelöst, dass die Heizungs- und Klimaanlage zum Kühlen des Kühlmittels mit Umgebungsluft einen vom Kühlmittel durchströmten Kühlmittel-Kühler aufweist, welcher zumindest im ersten Betriebsmodus mit dem Verdampfer des Kältemittelkreises und zumindest im zweiten Betriebsmodus mit dem Kondensator des Kältemittelkreises thermisch verbindbar ist.

Die vorgesehene Temperierpumpeneinheit ist dabei als reversible Kältekreislauf respektive Wärmepumpeneinheit ausgeführt.

Der bevorzugt als Kühlmittel/Luft-Wärmetauscher ausgebildete Kühlmittel-Kühler ist beispielsweise an der Fahrzeugfront angeordnet und dient dazu, um Wärme des Kondensators Kältemittelkreises über das Kühlmittel an die Umgebungsluft abzuführen oder Wärme der Umgebungsluft über das Kühlmittel dem Verdampfer des Kältemittelkreises zuzuführen. Dies ermöglicht eine deutliche Erhöhung des Wirkungsgrades der Heizungs- und Klimaanlage.

Eine Ausführung der Erfindung sieht vor, dass der zumindest eine Wärmetauschermodul einen primären und einen sekundären Wärmetauscher aufweist, welche seriell und/oder parallel vom Kühlmittel durchströmbar sind. Der primäre und der sekundäre Wärmetauscher sind dabei als Kühlmittel/Luft-Wärmetauscher ausgebildet und dienen zur Temperierung und Entfeuchtung der Luft des Innenraumes.

Dadurch, dass der Wärmetauschermodul zwei separate Wärmetauscher aufweist, kann neben dem ersten Betriebsmodus zum Heizen des Innenraumes, insbesondere mit beiden Wärmetauschern, und dem zweiten Betriebsmodus zum Kühlen des Innenraumes, bei denen der sekundäre Wärmetauscher und der primäre Wärmetauscher nacheinander oder parallel durchströmt werden, ein dritter Betriebsmodus zur Entfeuchtung des Innenraumes gefahren werden, in welchem der sekundäre primäre und der primäre Wärmetauscher parallel durchströmt werden. Im dritten Betriebsmodus weist der sekundäre Wärmetauscher über den Warmkreis mit dem Kondensator und der primäre Wärmetauscher über den Kaltkreis mit dem Verdampfer thermisch verbunden.

In einer Ausführungsvariante der Erfindung ist vorgesehen, dass die Heizungs-, Lüftungs- und Klimatisierungs-Einheit einen ersten Wärmetauschermodul und einen zweiten Wärmetauschermodul aufweist, wobei der erste Wärmetauschermodul und die zweite Wärmetauschermodul parallel vom Kühlmittel durchströmbar sind. Beispielsweise kann der erste Wärmetauschermodul einem Frontbereich des Innenraumes des Fahrzeuges und der zweite Wärmetauschermodul einem Heckbereich des Innenraumes des Fahrzeuges zugeordnet sein. Bei größeren Innenräumen können gegebenenfalls weitere Wärmetauschermodule vorgesehen sein, welche parallel vom Kühlmittel durchströmbar sind. Vorzugsweise kann jeder Wärmetauschermodul unabhängig von den anderen Wärmetauschermodulen geregelt werden.

Zur weiteren Steigerung der Effizienz ist in einer Ausführungsvariante der Erfindung vorgesehen, dass der Kältemittelkreis zumindest einen internen Wärmetauscher aufweist, wobei der Wärmetauscher ausgebildet ist um Wärme zwischen einem stromaufwärts der Expansionseinrichtung angeordneten ersten Abschnitt des Kältemittelkreises und einem stromabwärts des Verdampfers angeordneten zweiten Abschnitt des Kältemittelkreises zu übertragen.

Zum Temperieren und Klimatisieren des Innenraumes ist erfindungsgemäß ein Verfahren vorgesehen, bei dem in einem ersten Betriebsmodus zumindest ein Wärmetauschermodul der Heizungs-, Lüftung- und Klimatisierungs-Einheit zum Erwärmen des Innenraumes über den Warmkreis mit dem Kondensator des Kältemittelkreises und in einem zweiten Betriebsmodus der Heizungs-, Lüftung- und Klimatisierungs-Einheit zum Kühlen des Innenraumes über den Kaltkreis mit dem Verdampfer des Kältemittelkreises thermisch verbunden wird, wobei zumindest im ersten Betriebsmodus der Kühlmittel-/Luftwärmetauscher mit dem Verdampfer des Kältemittelkreises und zumindest im zweiten Betriebsmodus mit dem Kondensator des Kältemittelkreises thermisch verbunden wird.

In einer Ausführungsvariante der Erfindung wird ein primären und ein sekundärer Wärmetauscher zumindest eines Wärmetauschermoduls im ersten Betriebsmodus und/oder im zweiten Betriebsmodus seriell vom Kühlmittel durchströmt. Dies ermöglicht eine effiziente Temperierung des Innenraumes auf eine gewünschte Solltemperatur.

Um eine effiziente Klimatisierung des Innenraumes zu ermöglichen, ist in einer weiteren Ausführungsvariante der Erfindung vorgesehen, dass in einem dritten Betriebsmodus zum Entfeuchten des Innenraumes der primäre Wärmetauscher zumindest eines Wärmetauschermoduls über den Kaltkreis mit dem Verdampfer und der sekundäre Wärmetauscher zumindest eines Wärmetauschermoduls über den Warmkreis mit dem Kondensator thermisch verbunden werden, wobei der Durchfluss des Kühlmittels durch den sekundären Wärmetauschermodul entsprechend der gewünschten Solltemperatur im Innenraum geregelt wird.

In weiterer Ausführung der Erfindung ist vorgesehen, dass ein erster Wärmetauschermodul und ein zweiter Wärmetauschermodul in zumindest einem Betriebsmodus parallel vom Kühlmittel durchströmt werden. Auf diese Weise kann der Innenraum sehr rasch auf gewünschte Solltemperaturen gebracht werden, wobei durch entsprechende Einstellung von Luftleitklappen im Klimatisierungssystem auch mehrere unterschiedliche Klimazonen im Innenraum verwirklicht werden können.

Die Erfindung wird im Folgenden anhand des in den Figuren dargestellten nicht einschränkenden Ausführungsbeispiels näher erläutert. Darin zeigen schematisch:
- Fig. 1: ein Schaltbild einer erfindungsgemäßen Heizungs- und Klimaanlage,
- Fig. 2: die Heizungs- und Klimaanlage in einem ersten Betriebsmodus,
- Fig. 3: die Heizungs- und Klimaanlage in einem zweiten Betriebsmodus, und
- Fig. 4: die Heizungs- und Klimaanlage in einem dritten Betriebsmodus.

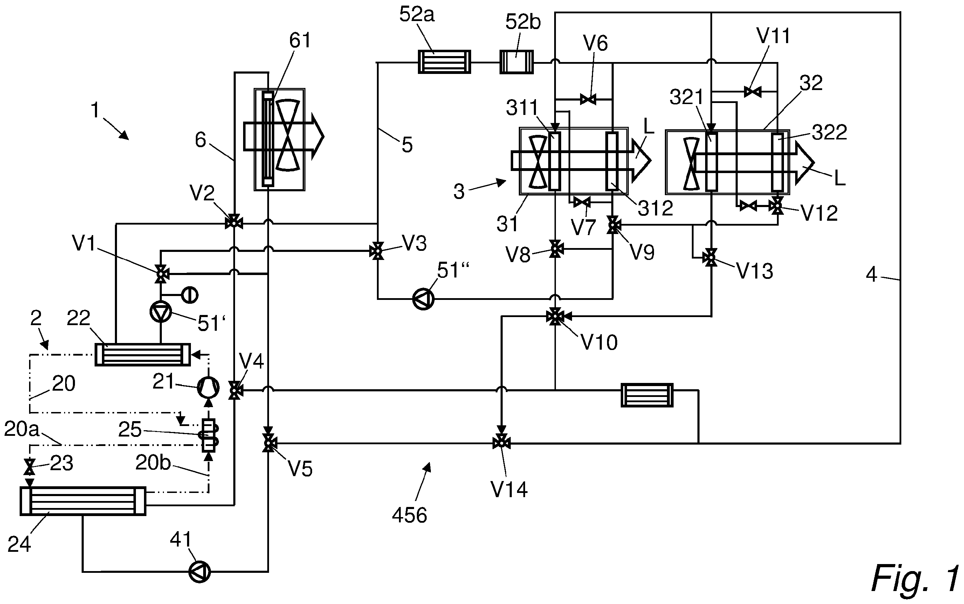

Die in den Fig. 1 bis 4 dargestellte Heizungs- und Klimaanlage 1 zur Temperierung des Innenraumes eines Kraftfahrzeuges, insbesondere eines Elektrofahrzeuges, weist eine Temperierpumpeneinheit 2 mit einem von einem Kältemittel durchströmten Kältemittelkreis 20 und eine Heizungs-, Lüftungs- und Klimatisierungs-Einheit 3 (HVAC= "Heating, Ventilation and Air Conditioning") mit einem von einem Kühlmittel durchströmte Kaltkreis 4 und einem vom Kühlmittel durchströmten Warmkreis 5 auf. Weiters weist die Heizungs-, Lüftung- und Klimatisierungs-Einheit 3 einen Kühlmittelkühlerkreis 6 mit einem Kühlmittelkühler 61 auf. Der als Kühlmittel/Luft-Wärmetauscher ausgebildete Kühlmittelkühler 61 dient dazu, Wärme aus dem Kühlmittelkühlerkreis 6 an die Umgebungsluft abzuführen. Kaltkreis 4, Warmkreis 5 und Kühlmittelkühlkreis 6 werden hier zusammenfassend auch als Kühlmittelkreis 456 bezeichnet. Im Kaltkreis 4 und im Warmkreis 5 sind Kaltkühlmittelpumpen 41, 51', 51" zur Förderung des Kühlmittels angeordnet. Zum Umschalten zwischen den Betriebsmoden sind im Kühlmittelkreis 456 Ventile V1, V2, V3, V4, V5, V6, V7, V8, V9, V10, V11, V12, V13, V14 angeordnet.

Im Warmkreis kann optional zusätzlich eine kalorische Heizeinrichtung 52a und/oder eine PTC-Heizung 52b vorgesehen sein, um die Temperierpumpeneinheit 2 bei tiefen Temperaturen gegebenenfalls zu unterstützen.

Das Kältemittel kann beispielsweise ein natürliches Kältemittel oder ein synthetisches Kältemittel sein. Der Kältemittelkreis 20 kann auf verschiedenen Kaltdampfprozessen, insbesondere auch auf transkritischen, basieren.

Als Kühlmittel kann eine beispielsweise Wasser und/oder Glykol enthaltende herkömmliche Kühlflüssigkeit eingesetzt werden.

Der Kältemittelkreis 20 weist einen Kompressor 21, einen Kondensator 22, eine Expansionseinrichtung 23 und einen Verdampfer 24 auf. Der Kondensator 22 und der Verdampfer 24 sind als Kältemittel/Kühlmittel-Wärmetauscher ausgebildet, um Wärme zwischen dem Kältemittel des Kältemittelkreises 20 und dem Kühlmittel des Kühlmittelkreises 456 zu übertragen. Die Expansionseinrichtung 23 kann beispielsweise durch eine Drossel gebildet sein.

Weiters ist in dem dargestellten Ausführungsbeispiel ein interner Wärmetauscher 25 - ein Kältemittel/Kältemittel-Wärmetauscher - vorgesehen, welcher ausgebildet ist, um Wärme zwischen einem stromaufwärts der Expansionseinrichtung 23 angeordneten ersten Abschnitt 20a des Kältemittelkreises 20 und einem stromabwärts des Verdampfers 24 angeordneten zweiten Abschnitt 20b des Kältemittelkreises 20 zu übertragen.

Die Heizungs-, Lüftung- und Klimatisierungs-Einheit 3 ist mit dem Kondensator 22 des Kältemittelkreises 20 oder mit dem Verdampfer 24 des Kältemittelkreiseses 20 strömungsverbindbar.

Die Heizungs-, Lüftung- und Klimatisierungs-Einheit 3 weist im Ausführungsbeispiel vom Kühlmittel durchströmte erste 31 und zweite Wärmetauschermodule 32 auf. Jeder Wärmetauschermodul 31, 32 weist einen primären Wärmetauscher 311, 321 und einen sekundären Wärmetauscher 312, 322 auf, welche als Kühlmittel/Luft-Wärmetauscher ausgebildet sind. Die primären 311, ,321 und sekundären Wärmetauscher 312, 322 dienen dazu, Wärme zwischen dem Kühlmittel und der durch Pfeil L angedeuteten Luft des Innenraumes zu übertragen, also den Innenraum zu kühlen oder zu erwärmen. Durch jeden Wärmetauschermodul 31, 32 können zwei Klimazonen - im dargestellten Ausführungsbeispiel also insgesamt vier Klimazonen - im Innenraum es Kraftfahrzeuges ausgebildet werden. Diese beiden Wärmetauschermodule 31, 32 werden im ersten Betriebsmodus mit heißem Kühlmittel für das Heizen des Innenraumes oder im zweiten Betriebsmodus mit kaltem Kühlmittel für das Kühlen des Innenraums durchströmt. Bei Bedarf können auch mehr als zwei Wärmetauschermodule eingesetzt werden.

Der Kondensator 22 des Kältemittelkreises 20 bleibt stets die Wärmesenke und der Verdampfer 24 bleibt stets die Wärmequelle des Kältemittelkreises 2. Das Umschalten zwischen dem ersten Betriebsmodus für das Heizen, dem zweiten Betriebsmodus für das Kühlen und dem dritten Betriebsmodus für das Entfeuchten des Innenraumes findet durch Umschalten von kühlmittelseitigen Ventilen V1, V2, V3, V4, V5, V6, V7, V8, V9, V10, V11, V12, V13, V14 statt.

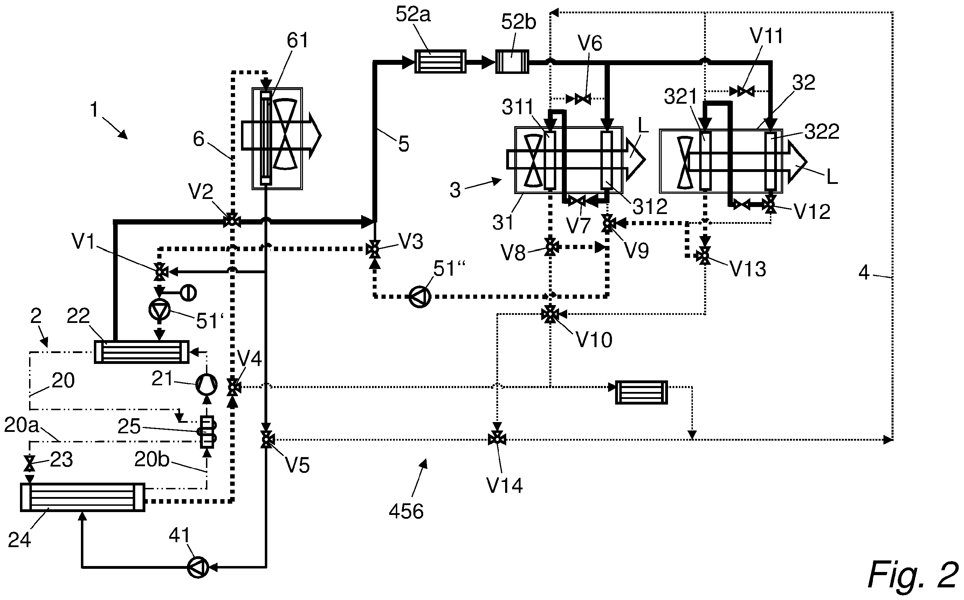

Im in Fig. 2 dargestellten ersten Betriebsmodus ist der Verdampfer 24 immer mit dem Kühlmittelkühler 61 verbunden, um die Wärme aus der Umgebung aufzunehmen und der Kondensator 22 mit der Heizungs-, Lüftung- und Klimatisierungs-Einheit 3 verbunden, um den Innenraum zu heizen. Warme bzw. heiße Kühlmittelströme sind mit fetten, vollen Linien gekennzeichnet während kalte bzw. kältere Kühlmittelströme mit punktierten Linien dargestellt sind.

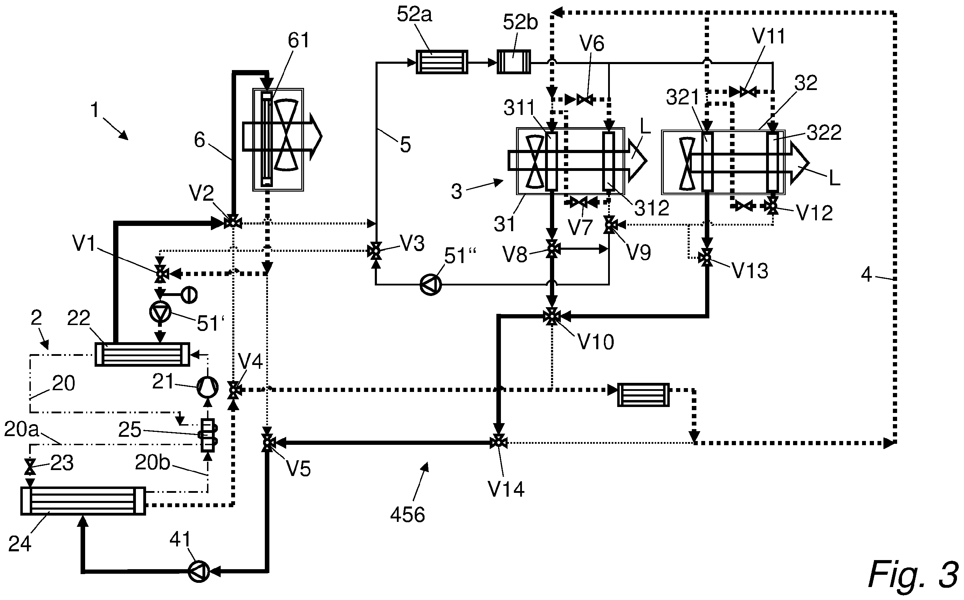

Im in Fig. 3 gezeigten zweiten Betriebsmodus ist der Verdampfer immer mit der Heizungs-, Lüftung- und Klimatisierungs-Einheit 3 verbunden, um den Innenraum zu kühlen und der Kondensator 22 mit dem Kühlmittelkühler 61, um die Wärme an die Umgebung abzugeben. Für die Regelung der Wärmetauscher 311, 312, 321, 322 werden Ventile V1, V2, V3, V4, V5, V6, V7, V8, V9, V10, V11, V12, V13, V14 im Kühlmittelkreis 456 zur Heizungs-, Lüftung- und Klimatisierungs-Einheit 3, bzw. zum Kühlmittelkühler 61 geeignet geschaltet. Auch hier sind warme bzw. heiße Kühlmittelströme mit fetten, vollen Linien gekennzeichnet während kalte bzw. kältere Kühlmittelströme mit punktierten Linien dargestellt sind.

Bei gegebenen großen Luftauslassöffnungen der Heizungs-, Lüftung- und Klimatisierungs-Einheit 3 bzw. ausreichend hohem Luft-Volumenstrom können somit, sowohl fürs Heizen und Kühlen, beide Wärmetauscher 311, 312; 321, 322 jedes Wärmetauschermoduls 31, 32 der Heizungs-, Lüftungs- und Klimatisierungs-Einheit 3 - auf das gewünschte Temperaturniveau angepasst - in Serie (oder parallel) mit kaltem oder heißem Kühlmittel durchströmt werden. Beispielsweise wird im ersten und zweiten Betriebsmodus zuerst der sekundäre Wärmetauscher 312, 322 und dann der primäre Wärmetauscher 311, 321 jeweils mit kühlem oder heißem Kühlmittel durchströmt.

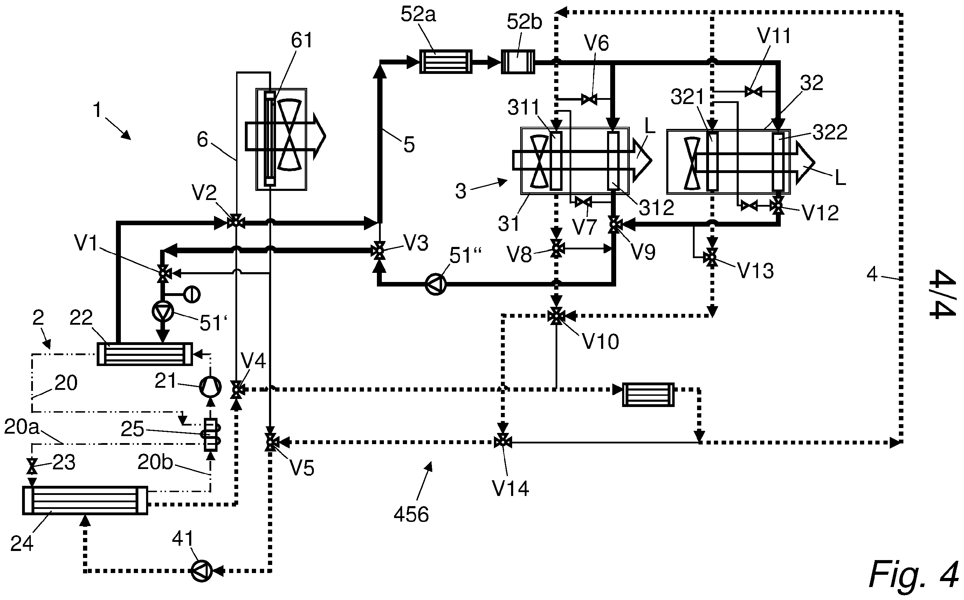

Im aus Fig. 4 ersichtlichen dritten Betriebsmodus wird für das Entfeuchten des Innenraumes der primäre Wärmetauscher 311, 321 mit kaltem Kühlmittel (siehe fette punktierte Linien) und der sekundäre Wärmetauscher 312, 322 mit warmem Kühlmittel (siehe fette volle Linien) - zum Wiedererwärmen und Temperieren (Reheat) auf die gewünschte Temperatur durchströmt.

Dadurch erhält man im Vergleich zu konventionellen Luft/Luft-Wärmepumpen eine doppelt so große Wärmetauscherfläche in der Heizungs-, Lüftung- und Klimatisierungs-Einheit 3. Somit kann die kühlmittelseitige Zieltemperatur des extern umschaltbaren Kältemittelkreises 20 mit Wärmepumpenfunktion näher an die Solltemperatur des Innenraumes angepasst werden; wodurch sich die Effizienz (COP im Heizfall; bzw. EER im Kühlfall) maßgeblich verbessert. (COP=Coefficient Of Performance; EER=Energy Efficient Ratio). Versuche und Berechnungen haben ergeben, dass der COP im Heizfall somit um bis zu 30% gesteigert werden kann, was für die Reichweite in reinen Elektrofahrzeugen im Winter eine Verbesserung gegenüber PTC-Heizungen (PTC: Positive Temperature Coefficient) um ca. 50% und gegenüber konventionellen Wärmepumpen von ca. 15% bedeutet.

## Patentansprüche

1. Heizungs- und Klimaanlage (1), insbesondere für ein Kraftfahrzeug, mit einer Temperierpumpeneinheit (2) mit einem von einem Kältemittel durchströmten Kältemittelkreis (20) mit einem Kompressor (21) , einem Kondensator (22), einer Expansionseinrichtung (23) und einem Verdampfer (24),
mit einer Heizungs-, Lüftungs- und Klimatisierungs-Einheit (3) mit zumindest einem von einem Kühlmittel durchströmten Wärmetauschermodul (31, 32), einem Kaltkreis (4) und einem Warmkreis (5), wobei zumindest in einem ersten Betriebsmodus der Warmkreis (4) mit dem Kondensator (22) des Kältemittelkreiseses (20) und zumindest in einem zweiten Betriebsmodus der Kaltkreis (4) mit dem Verdampfer (24) des Kältemittelkreises (20) thermisch verbindbar ist, **dadurch gekennzeichnet, dass** die Heizungs- und Klimaanlage (1) zum Kühlen des Kühlmittels mit Umgebungsluft einen vom Kühlmittel durchströmten Kühlmittel-Kühler (61) aufweist, welcher zumindest im ersten Betriebsmodus mit dem Verdampfer (24) des Kältemittelkreises (20) und zumindest im zweiten Betriebsmodus mit dem Kondensator (22) des Kältemittelkreises (20) thermisch verbindbar ist.

2. Heizungs- und Klimaanlage (1) nach Anspruch 1, **dadurch gekennzeichnet, dass** der zumindest eine Wärmetauschermodul (31, 32) einen primären (311, 321) und einen sekundären Wärmetauscher (312, 322) aufweist, welche seriell und/oder parallel vom Kühlmittel durchströmbar sind.

3. Heizungs- und Klimaanlage (1) nach Anspruch 1 oder 2, **dadurch gekennzeichnet, dass** die Heizungs-, Lüftung- und Klimatisierungs-Einheit (3) einen ersten Wärmetauschermodul (31) und einen zweiten Wärmetauschermodul (32) aufweist, wobei der erste Wärmetauschermodul (31) und der zweite Wärmetauschermodul (32) parallel vom Kühlmittel durchströmbar sind.

4. Heizungs- und Klimaanlage (1) nach einem der Ansprüche 1 bis 3, **dadurch gekennzeichnet, dass** der Kältemittelkreis (20) zumindest einen internen Wärmetauscher (25) aufweist, wobei der interne Wärmetauscher (25) ausgebildet ist, um Wärme zwischen einem stromaufwärts der Expansionseinrichtung (23) angeordneten ersten Abschnitt (20a) des Kältemittelkreises (20) und einem stromabwärts des Verdampfers (24) angeordneten zweiten Abschnitt (20b) des Kältemittelkreises (20) zu übertragen.

5. Verfahren zum Temperieren und/oder Klimatisieren eines Innenraumes, insbesondere eines Fahrzeuges, mit einer Heizungs- und Klimaanlage (1) nach einem der Ansprüche 1 bis 4, **dadurch gekennzeichnet, dass** in einem ersten Betriebsmodus zumindest ein Wärmetauschermodul (31, 32) der Heizungs-, Lüftung- und Klimatisierungs-Einheit (3) zum Erwärmen des Innenraumes über den Warmkreis (5) mit dem Kondensator (22) des Kältemittelkreises (20) und in einem zweiten Betriebsmodus Heizungs-, Lüftung- und Klimatisierungs-Einheit - (3) zum Kühlen des Innenraumes über den Kaltkreis (4) mit dem Verdampfer (24) des Kältemittelkreises (20) thermisch verbunden wird, wobei zumindest im ersten Betriebsmodus der Kühlmittel-/Luftwärmetauscher (61) mit dem Verdampfer (24) des Kältemittelkreises (20) und zumindest im zweiten Betriebsmodus mit dem Kondensator (22) des Kältemittelkreises (20) thermisch verbunden wird.

6. Verfahren nach Anspruch 5, **dadurch gekennzeichnet, dass** der erste Wärmetauschermodul (31) und der zweite Wärmetauschermodul (32) in zumindest einem Betriebsmodus parallel vom Kühlmittel durchströmt werden.

7. Verfahren nach Anspruch 5 oder 6, **dadurch gekennzeichnet, dass** ein primären (311, 321) und ein sekundärer Wärmetauscher (312, 322) des ersten (31) und/oder des zweiten Wärmetauschermoduls (32) zumindest im ersten und/oder zweiten Betriebsmodus seriell vom Kühlmittel durchströmt werden.

8. Verfahren nach einem der Ansprüche 5 bis 7, **dadurch gekennzeichnet, dass** in einem dritten Betriebsmodus zum Entfeuchten des Innenraumes der primäre Wärmetauscher (311, 321) zumindest eines Wärmetauschermoduls (31, 32) über den Kaltkreis (4) mit dem Verdampfer (24) und der sekundäre Wärmetauscher (312, 322) zumindest eines Wärmetauschermoduls (31, 32) über den Warmkreis (5) mit dem Kondensator (22) thermisch verbunden werden, wobei der Durchfluss des Kühlmittels durch den sekundären Wärmetauschermodul (312, 322) entsprechend der gewünschten Solltemperatur im Innenraum geregelt wird.
